(19) Europäisches Patentamt
European Patent Office
Office européen des brevets

(11) **EP 2 158 526 B1**

(12) **EUROPÄISCHE PATENTSCHRIFT**

(45) Veröffentlichungstag und Bekanntmachung des Hinweises auf die Patenterteilung:
**10.08.2011  Patentblatt 2011/32**

(21) Anmeldenummer: **08773426.5**

(22) Anmeldetag: **13.06.2008**

(51) Int Cl.:
*G05B 19/416* $^{(2006.01)}$

(86) Internationale Anmeldenummer:
**PCT/EP2008/004754**

(87) Internationale Veröffentlichungsnummer:
**WO 2008/151810 (18.12.2008 Gazette 2008/51)**

(54) **VERFAHREN ZUR OPTIMIERTEN BEWEGUNGSKOORDINATION VON MESS- ODER WERKZEUGMASCHINEN MIT REDUNDANTEN TRANSLATORISCH WIRKSAMEN ACHSEN**

METHOD FOR THE OPTIMISED MOVEMENT CO-ORDINATION OF MEASURING MACHINES OR MACHINE-TOOLS COMPRISING REDUNDANT AXLES HAVING A TRANSLATORY ACTION

PROCÉDÉ POUR OPTIMISER LA COORDINATION DES MOUVEMENTS DE MACHINES DE MESURE OU DE MACHINES-OUTILS COMPORTANT DES AXES À TRANSLATION REDONDANTE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.06.2007  DE 102007027503**

(43) Veröffentlichungstag der Anmeldung:
**03.03.2010  Patentblatt 2010/09**

(73) Patentinhaber: **TRUMPF Werkzeugmaschinen GmbH + Co. KG**
**71254 Ditzingen (DE)**

(72) Erfinder: **EHLERDING, Andreas**
**30926 Seelze (DE)**

(74) Vertreter: **Kohler Schmid Möbus**
**Patentanwälte**
**Ruppmannstraße 27**
**70565 Stuttgart (DE)**

(56) Entgegenhaltungen:
**EP-A- 0 743 579        DE-A1- 4 123 323**
**DE-A1- 19 851 781    US-A- 5 109 148**
**US-A- 5 589 750        US-A1- 2006 004 480**

## Beschreibung

### Technisches Gebiet und Stand der Technik

In der Entwicklung von Mess- und Werkzeugmaschinen kommt es zunehmend zum Einsatz von redundanten translatorisch wirksamen Achsen, also Achsen, die aufeinander aufbauend oder gegeneinander wirksam, parallel im Raum zueinander bewegbar sind, wobei ein oder mehrere Zusatzachsen mit einem relativ kurzen Bewegungsspielraum auf oder gegenüber von Basisachsen, mit einem relativ langen Bewegungsspielraum angeordnet sind.

Solche redundant in gleicher Richtung überlagert bewegbare Achsen, bieten die Möglichkeit den größeren Bewegungsspielraum der Basisachsen mit den höheren Beschleunigungsmöglichkeiten kurzwegiger und damit leichter gebauter Zusatzachsen, in einem kontinuierlichen Bewegungsablauf einer Messeinrichtung oder eines Werkzeuges, relativ zu einem Mess- oder Bearbeitungsgut, zu kombinieren.

Ein Beispiel für ein derartiges Konzept ist das Patent EP 594 699 B1 (Ehlerding). In besagtem Patent wurde vorgeschlagen, parallel ausgerichtete überlagert wirksame Achsanordnungen zu nutzen, um die hohen Beschleunigung leichter kurzwegiger Achsen im gesamten Arbeitsbereich weniger beschleunigbarer, langwegiger Achsen, in solchen Werkzeugmaschinen zu ermöglichen, die vorzugsweise für eine Bearbeitung von flächigen oder flachen Werkstücken in zwei oder drei orthogonal zueinander ausgerichteten Achsen ausgelegt sind.

Aus dieser Veröffentlichung ist bekannt, daß hier als Zusatzachsen bezeichnete kürzere Teilachsen von einem über dem Material bewegbaren Portal mit einer die Zusatzachsen tragender Bewegungseinheit, die sich wiederum an dem Portal entlang bewegt, getragen sein können, oder mittels Basisachsen auch das Material bewegt werden kann, wobei sich ein Werkzeug mittels Zusatzachsen nochmals unabhängig von der Bewegung durch die Basisachsen, gegenüber dem Material bewegen kann. Genauso ist auch vorstellbar ein oder mehrere Zusatzachsen, die ein Werkzeug tragen, an einem festen Portal entlang, als einer Basisachse, über das Material zu bewegen, während das Material mittels einer weiteren orthogonal zum Portal orientierten Basisachse unter dem Portal entlang bewegt wird.

Allgemein ist bekannt, daß anstatt eines Portales auch eine Traverse oder ein bewegbarer oder stationärer Arm oder Ausleger mit bewegter oder stationärer Stütze als Träger von Zusatzachsen dienen kann und daß alle genannten Achskonfigurationen auch abweichend vom üblichen Fall, in dem die Basisachsen vorzugsweise die schweren Maschinenteile oder das schwere Mess- oder Bearbeitungsgut in der horizontalen Ebene bewegen, auch eine andere Orientierung im Raum besitzen können.

Statt der Messeinrichtungen oder Werkzeuge, kann auch leichtes oder kleines Mess- oder Bearbeitungsgut durch die Zusatzachsen getragen und durch gemeinsame Bewegung von Basis- und Zusatzachsen entlang von Messeinrichtungen oder Werkzeugen geführt werden, ohne daß hierzu eine grundlegend andere Koordination erforderlich wäre.

Beispielsweise aus WO 2006/75209 A2 (Gattiglio et al) ist zudem bekannt, daß Zusatzachsen zwar physisch orthogonal zueinander ausgerichtet sind, und sich gemeinsam in einer Ebene bewegen, die an zwei Basisachsen ausgerichtet ist, jedoch so, daß die physischen Zusatzachsen in dieser Bewegungsebene nicht parallel zu den Basisachsen ausgerichtet sind, beispielsweise, wie in WO 2006/75209 A2, um 45° gegenüber den Basisachsen in der gemeinsamen Bewegungsebene gedreht.

Eine redundante, parallel ausgerichtete Wirkung der Achsen ist grundsätzlich auch hier leicht zu implementieren, da die hierzu notwendige feste Transformation zwischen den Ausrichtungen von zwei an den physischen Achsrichtungen orientierten kartesischen Koordinatensystemen, mittels simpelster konstant wirkender analoger, digitaler oder computertechnisch berücksichtigter Multiplikationselemente, problemlos auch für den durchschnittlichen Fachmann vorzusehen ist.

Weiterhin ist aus dem Stand der Technik bekannt, daß anstelle linear bewegter Zusatzachsen, auch der Einsatz rotorisch um einen meist geringen Winkelbetrag bewegbarer Einrichtungen möglich ist, so daß mittels eines ausreichenden Abstandes zwischen Drehpunkt und Mess- oder Bearbeitungspunkt, eine ausreichend angenähert lineare Bewegung der für die Messung oder Bearbeitung relevanten Elemente einer Messeinrichtung oder eines Werkzeuges entsteht. Eine Variante hiervon wird genutzt, wenn gebündelte Strahlungsenergie, meist ein Laserstrahl, mittels schwenkbarer Spiegel oder anderer Ablenkungselemente auf eine Bearbeitungsstelle gelenkt wird.

Zusatzachsen in diesem Sinne werden beispielsweise in dem Dokument WO 96/29634 A1 (Cutler et al) ausführlich behandelt, siehe illustrativ hierzu besonders Fig. 2 und Fig. 4 dort.

Ähnliche mechanische Verhältnisse betreffend der Zusatzachsen sind auch für andere Werkzeuge denkbar, beispielsweise rotierbare Fräsköpfe, oder entsprechende Messeinrichtungen, wobei oft zusätzlich eine Bewegung längs der Werkzeug- oder beispielsweise einer Meßtasterachse möglich ist, auch zur Kompensation der Abweichung von einer zur jeweiligen Basisachse exakt parallelen Bewegung.

Ebenso ist aus dem US Patent 5 910 260 (Gerber) eine ähnliche Achskonfiguration bekannt, mit einer als "beam shifter" bezeichneten Ablenkeinheit für einen Laserstrahl. Betreffend der Koordination wird dort gelehrt, daß die trägeren Basisachsen eine weniger detaillierte Version der Sollkontur abfahren, während ergänzend sich die Zusatzachsen entsprechend der in der Bahn der Basisachsen fehlenden Details bewegen.

Tatsächlich ist dies jedoch eher eine Aufgabenbeschreibung als eine technische Lösung des Problems, da hier völlig unklar bleibt, wie diese getrennten Bewegungsanteile erzeugt werden und wie eine ausreichend synchronisierte und effiziente Koordination beider Achsarten technisch realisiert werden kann. Alle dort in Beschreibung und Ansprüchen genannten Lösungsansätze hierfür, können keine effiziente Nutzung der Zusatzachsen bei zugleich weitgehend konstanter Bewegungsgeschwindigkeit des Werkzeuges gegenüber dem Material sicherstellen.

Entweder ist vorgesehen die Basisachse in ihrer Bewegungsgeschwindigkeit zu verlangsamen, um den Zusatzachsen das Abfahren der Details mit der Sollgeschwindigkeit und konstanten Bearbeitungsparametern zu erlauben (Anspruch 15 dort, letzter Teilsatz), oder es ist eine Beschleunigung der Bearbeitungsgeschwindigkeit während der Nutzung der Zusatzachsen vorgesehen (Anspruch 16 dort, letzter Teilsatz).

Details ("Features") können dort sowohl die von der Sollkontur abgetrennte Differenz zur Bewegung der Basisachsen sein, als auch eigenständige Konturen, die synchron zur Bewegung der Basisachsen an bestimmten Positionen separat ausgeführt werden sollen, wie in der Beschreibung dort, in Spalte 4, Zeilen 43 bis 54, ausgeführt wird. Dies alles führt jedoch nicht zu technisch nachvollziehbaren effektiven Lösungen. Daß die "Features" mit höher Geschwindigkeit ausgeführt werden sollen, als die sonstige Bearbeitung, steht in völligem Gegensatz zum üblichen Ziel einer effizienten gleichmäßigen Bearbeitung mit der höchstmöglichen Geschwindigkeit, so daß es nicht sinnvoll erscheint diese Möglichkeit hier weiter vertiefend zu diskutieren. Jedoch reicht es ebenso auch nicht, lediglich darauf hinzuweisen, daß die Geschwindigkeit der Basisachsen zur Erzielung einer gleichmäßigen Bearbeitungsgeschwindigkeit abnehmen sollte, wenn die Zusatzachsen zur Ausführung der "Features" zum Einsatz kommen. Einerseits wäre dies wohl schon dem völligen Nichtfachmann anhand simpelster Summenbildung in den Sinn gekommen. Andererseits geht daraus nicht die geringste Information für ein funktionierendes Konzept zur entsprechenden Koordinierung der Achsen hervor.

Es ist unmöglich aus der Patentschrift US 5 910 260 auch nur eine grobe Regel zu entnehmen, wie eine Verlangsamung der Bewegung der Basisachsen, passend zu den Bewegungen der Zusatzachsen erfolgen soll, um eine weitgehend konstante Bearbeitungsgeschwindigkeit zu erhalten.

Ohne eine solche Regel, die für die von vornherein getrennte Abarbeitung entsprechender Teilkonturen durch Basis- und Zusatzachsen auch aus dem Stand der Technik nicht bekannt ist, dürfte die Realisierung einer entsprechenden Achskoordination jedoch nicht möglich sein.

Es wird nicht beschrieben wie zwei ausschließlich geometrisch definierte Teilkonturen in einer synchronen Bewegung von Teilsystemen wieder in eine Sollkontur zusammenzuführen sind. Dies wäre ein im Zeitverlauf komplexer Vorgang, für den bisher kein passender Stand der Technik vorliegt, der hierzu, für den Fachmann klar ersichtlich, verwendbar wäre.

In der Patentschrift EP 1 294 544 B1 (Sartorio) wird eine weitere Konfiguration gezeigt und als eine Neuerung gegenüber dem früheren Stand der Technik eine zweiachsig linear bewegbare parallelkinematische Zusammenfassung der hoch beschleunigbaren Zusatzachsen gelehrt, was insbesondere zu dem Vorteil führt, daß in beiden horizontalen Hauptbewegungsrichtungen einer derart realisierten Maschine insoweit vergleichbare kinematische Verhältnisse herrschen, was die Effizienz einer zweidimensionalen Werkzeugbewegung verbessern kann.

Über die praktische Koordination der simultan betriebenen Achsen wird jedoch ebenfalls wenig offenbart. Lediglich einige wesentliche Rahmenbedingungen werden genannt, die bei der Koordination der Teilachsen gelten sollen. Ab Satz [24] bis Satz [39] der Beschreibung und im Hauptanspruch wird im Patent EP 1 294 544 B1 hierzu etwas ausgeführt.

Insbesondere wird für wichtig gehalten (ab Satz [36] der Beschreibung), daß die Basisachsen sich wesentlich schneller bewegen können, als die höchste Bearbeitungsgeschwindigkeit.

Dies soll bewirken, daß im Verlauf einer simultanen Gesamtbewegung, nach einem hoch beschleunigten Voreilen der Zusatzachsen und vor einer neuerlichen hohen Beschleunigung, die Basisachse wieder aufholen kann und somit die Zusatzachse sich nicht vor der nächsten Bewegung schon am Rand ihres maximalen Bewegungsbereiches befindet, so daß weitere hoch beschleunigte koordiniert simultane Bewegungen nicht mehr, oder nicht ausreichend, möglich wären und es so zu unerwünschten Diskontinuitäten, besonders bei einer mehrdimensionalen Bewegung des Werkzeuges, kommen könnte.

Wie nun aber eine überlagerte Bewegung der Teilachsen tatsächlich koordiniert werden soll, darüber findet sich in EP 1 294 544 B1 keine weitere Information. Somit ist dieses Dokument auch wenig hilfreich bei der praktischen Ausführung einer entsprechenden Maschine, da völlig im Dunkeln bleibt, wie und aus welchen Bedingungen sich die jeweiligen Daten zur Auslegung der einzelnen Komponenten ergeben sollen.

Der Zusammenhang zwischen Bewegungsgeschwindigkeit eines Werkzeuges gegenüber dem Material, Maximalgeschwindigkeiten der Basis- und Zusatzachsen, Beschleunigungen und des notwendigen Bewegungsspielraumes für die Zusatzachsen, in Abhängigkeit von diesen Größen, wird nirgendwo hergestellt.

Die einzigen Informationen, die aus dem oben genannten Abschnitt der Beschreibung zu entnehmen sind, ergeben die Lehre, daß die Maximalgeschwindigkeit der Basisachsen wesentlich höher sein müsse als die Werkzeuggeschwindigkeit, und daß es möglich sei aus den genannten Bedingungen und der Voraussetzung bekannter Maschinendaten die notwendigen Gleichungen aufzustellen, um die noch unbekannten Maschinendaten zu ermitteln.

Offenbar auf dieser noch unvollständigen Lehre aufbauend, wird in EP 1 758 003 A1 (Cardinale et al) eine Koordination der Achsen vorgeschlagen, die einerseits nach dem Prinzip der inversen Kinematik die redundanten Freiheitsgrade einer Bewegungsmechanik in einem hoch abstrakt mathematisierten Verfahren nutzen soll und andererseits gegenüber dem bekannten Stand der Technik nichts wirklich neues offenbart. Erstens ist eine Bewegungsaufteilung auf redundant wirksame Achsen durch Filterung keinesfalls einen Neuheit und im übrigen wird zu einer möglichen Auslegung einer für solche Verfahren passenden Maschine in einem Beispiel und auch in einem Erfindungsanspruch das wiederholt, was sinngemäß schon in EP 1 294 544 B1 zu lesen war:

Die Maximalgeschwindigkeit der Basisachsen wurde deutlich höher gewählt, als die der Zusatzachsen.
(Siehe EP 1 758 003 A1, Beschreibung, Satz 32 und Anspruch 9)

Dem gegenüber offenbart der ältere Stand der Technik aus EP 594 699 B1, neben einer Frequenzaufteilungsmethode zur Erzeugung getrennter Ansteuerungssignale für die von vornherein koordiniert auf verschiedene Beschleunigungsbereiche aufgeteilte Bewegung der Teilachsen, auch noch eine wichtige Rahmenbedingung bei der Konzeption derartiger Maschinen, die ohne Einschränkungen für jede auch mit maximaler Arbeitsgeschwindigkeit abgefahrene Bahnkontur, die volle Beschleunigungsmöglichkeit der Zusatzachsen für den gesamten Bewegungsbereich der Basisachsen ermöglichen soll.

So wird in EP 594 699 B1 auf eine minimal notwendige Bewegungsfreiheit der Zusatzachsen in Abhängigkeit von der Werkzeuggeschwindigkeit und der Beschleunigungsfähigkeit der Basisachsen hingewiesen.

Siehe hierzu Spalte 4, Zeile 27 bis Zeile 51 der Beschreibung.

Des weiteren hat der Anmelder der hier vorliegenden Erfindung den insoweit zu behandelten Stand der Technik, vor kurzer Zeit durch eine Patentanmeldung ergänzt, deren für die vorliegende Erfindung relevanter Anteil anschließend in Kurzform behandelt wird, um die Funktion und die Motivation der vorliegenden Erfindung besser verstehen und einordnen zu können.

Für alle Varianten von redundant translatorisch wirksamen Achsanordnungen, die mit einer gleichzeitigen Bewegung der redundanten Achsanteile arbeiten, ergibt sich eine Begrenzung der maximal möglichen Beschleunigung und konstanten Arbeitsgeschwindigkeit, wenn ein kontinuierlicher Bewegungsablauf über die Bereichsgrenzen, der kürzeren hoch beschleunigbaren Achsanteile (Zusatzachsen), hinausgeht.

Die Geschwindigkeitsgrenze hängt hauptsächlich von der Entfernung zwischen den besagten Bereichsgrenzen der Zusatzachsen und der maximal möglichen Beschleunigung der langsamer beschleunigbaren Basisachsen ab.

Eine Näherungsformel hierfür wurde schon schon In EP 594 699 B1 angegeben. Jedoch ist die Formel nur für solche Bewegungen korrekt, die sich innerhalb der zu koordinierenden parallel ausgerichteten Achskombination in eine Richtung bewegen. Die Verhältnisse bei erheblichen direkt aufeinander folgenden Gegenbewegungen wurden nicht berücksichtigt.

Für eine Bewegung mit maximaler Mess- oder Bearbeitungsgeschwindigkeit, aus dem Stand heraus, benötigt eine Basisachse einen Weg S von $Vbmax^2 / 2Bb$, wobei S für Beschleunigungsstrecke, Vbmax für die höchste Mess- oder Bearbeitungsgeschwindigkeit und Bb für die Beschleunigung der Basisachse steht. Spätestens nach diesem Weg kann die Basisachse die komplette Bewegung übernehmen, so daß die Zusatzachse, die während dieser Beschleunigung die Differenzgeschwindigkeit übernommen hat, annähernd auch dieselbe Wegstrecke in ihrem Bewegungsbereich zurücklegen mußte (Sz). Wenn jedoch aus einer solchen Bewegung heraus eine Richtungsumkehr erfolgt und eine Bewegung, die wiederum die gegenüberliegende Grenze des Bewegungsbereiches der Zusatzachse überschreiten würde, so benötigt die Basisachse, da die Relativgeschwindigkeit zur Sollbewegung nun doppelt so hoch ist, bei gleicher Beschleunigung auch die doppelte Zeit um wieder die angestrebte Geschwindigkeit in der anderen Richtung zu erreichen.

Das Ergebnis wäre, daß die Zusatzachse nun schon die vierfache Strecke hätte zürücklegen müssen, da sie, etwas vereinfacht, mit der doppelten Geschwindigkeit starten muß, um die überschießende Bewegung der Basisachse solange in die Gegenrichtung zu kompensieren, bis die Basisachse wieder die Sollgeschwindigkeit erreicht hat.

So ergibt sich als mögliche Lösung um Bewegungen auf beliebig komplexen Bahnkurven ohne weitere spezielle Verfahrensschritte ausführen zu können, eine Maschine oder ein Verfahren zu verwenden für die gilt, daß der Bewegungsspielraum einer Zusatzachse $4 Vbmax^2 / 2 Bb$ also vereinfacht $2 Vbmax^2 / Bb$ beträgt und die Zusatzachse kurzfristig mindestens annähernd mit der doppelten Mess- oder Bearbeitungsgeschwindigkeit bewegbar ist. Unabhängig davon, ob diese Werte, je nach Anwendungsfall, im Detail auch etwas geringer ausfallen können, ist nach dem aufgeführten Stand der Technik meist zusätzlich zu berücksichtigen, daß die Ausgangsposition der Zusatzachse vorzugsweise in der Mitte ihres Bewegungsbereiches liegt, so daß man diese Distanz zu den Grenzen des Bewegungsbereiches noch einmal doppelt benötigt, womit sich ein maximal notwendiger Bewegungsspielraum der Zusatzachse von insgesamt $4 Vbmax^2 / Bb$ ergeben kann, wenn nach dem bisherigen Stand der Technik eine Nutzung des vollen Beschleunigungspotentials der Zusatzachsen bei einer Mess- oder Bearbeitungsgeschwindigkeit Vbmax für jede Eventualität garantiert sein soll.

Die allgemeingültigere Form ist jedoch in dem Ausdruck Sz >= 2 Vbmax$^2$ /Bb zu sehen, da hierbei auch verbesserte Varianten zur Steuerung der bevorzugten Ausgangsposition der Zusatzachsen berücksichtigt sind.

Umgekehrt kann so bei gegebenem Bewegungsspielraum der Zusatzachsen und bekannter Beschleunigung der Basisachsen entsprechend leicht die unkritische Maximalgeschwindigkeit für Meß- oder Bearbeitungsbewegungen grob bestimmt werden, da eine Umstellung der obigen Gleichung ergibt: Vbmax=SQRT(Sz x Bb / 2) (SQRT = Quadratwurzel)

Diese Angaben stimmen nur näherungsweise, weil hierbei - der Übersichtlichkeit halber - das begrenzte Beschleunigungsvermögen der Zusatzachsen nicht extra berücksichtigt wurde. Genauer gilt

$$Sz = 2\ Vbmax^2 \times (1/Bb - 1/(Bb + Bz))$$

also entsprechend

$$Vbmax = SQRT(SZ / (2 \times (1/Bb - 1/(Bb + Bz))))$$

Somit kann sich nach dem Stand der Technik, abhängig von der Weglänge des Bewegungsbereiches der höher beschleunigbaren kurzen Teilachsen und der maximalen Beschleunigung der weniger beschleunigbaren längeren Teilachsen, eine maximale kontinuierliche Mess- oder Bearbeitungsgeschwindigkeit ergeben, die erheblich unterhalb der eigentlich konstruktiv möglichen Höchstwerte auf Basis der einzelnen Maschinenachsen liegt, wobei, aus unterschiedlichen Gründen, sowohl eine wesentliche Vergrößerung des Bewegungsbereiches der kürzeren Teilachsen, oder eine entsprechende Erhöhung der Beschleunigung der längeren Teilachsen, nicht möglich oder wirtschaftlich nicht sinnvoll sein mag, um die hohe Dynamik der kürzeren Teilachsen auch in höheren Geschwindigkeitsbereichen universell nutzen zu können, zumal mit wachsenden angestrebten Mess- oder Bearbeitungsgeschwindigkeiten, die Anforderungen an die Größe des Bewegungsbereiches der kürzeren Teilachsen überproportional wachsen.

Andererseits ermöglicht die Verringerung des notwendigen Bewegungsbereiches von Zusatzachsen eine kleinere Bauweise, erhöht die Beschleunigungsfähigkeit dieser Zusatzachsen sowie, je nach Gesamtbauweise, auch die der Basisachsen.

Beispielsweise könnte es in einigen Anwendungsbereichen nur relativ selten in einer Bearbeitung notwendig sein, die nach dem Stand der Technik notwendige Beschleunigung der Basisachsen oder einen entsprechend großen Spielraum der Zusatzachsen vorzuhalten, so daß für diese relativ kleinen Anteile im Verhältnis zu einer Gesamtbearbeitung, eine entsprechend leistungsfähige Auslegung einer Maschine unwirtschaftlich erscheint und entsprechende Anteile dann eben mit geringerer Geschwindigkeit bearbeitet werden.

Jedoch gibt es eine Reihe von Anwendnungsfällen in denen nur mit einer weitgehend konstanten Bearbeitungsgeschwindigkeit auch ein qualitativ konstantes Ergebnis möglich ist, meist weil eine ganze Reihe von oft langwierig ermittelten Parametern nur bei einer konstanten Bewegungsgeschwindigkeit an einem Werkstück so zusammenwirken, wie es erwünscht ist.

Dort ist jede größere Schwankung in der Bewegungsgeschwindigkeit im Prozeß dringend zu vermeiden, so daß konsequenterweise mit der höchstmöglichen weitgehend konstanten Geschwindigkeit für die gesamte Bearbeitung verfahren wird, die sich entsprechend am ungünstigsten Bahnabschnitt orientieren muß.

Ist die Maximalgeschwindigkeit in mindestens einer Gesamtachse im Verhältnis zur Beschleunigung und zur Verfügung stehenden Beschleunigungsstrecke höher, als es entsprechend der jeweiligen Mess- oder Werkzeugmaschine in allen relevanten denkbaren Bahnsituationen beherrschbar ist, wird dies von einer Einrichtung zur Koordination der Achsen, also gewöhnlich einer entsprechenden CNC-Steuerung nach dem Stand der Technik, nicht optimal berücksichtigt werden können, so daß es zu abrupten Geschwindigkeitseinbrüchen kommt, weil beispielsweise ein Werkzeug dem Rand des Bewegungsbereiches einer Zusatzachse zu nahe kommt. Entweder muß also die Bewegungsgeschwindigkeit vermindert werden, oder es kann zu Mess- und Bearbeitungsfehlern, durch die resultierenden diskontinuierlichen Bewegungen kommen, bis hin zu Fehlfunktionen und Betriebsstörungen.

Nach dem Stand der Technik wäre es bei derart kritischen Anwendungen, notwendig sich bei der Nutzung der Zusatzachsen auf solche kontinuierlich abzufahrenden Bahnen zu beschränken, die entweder nicht zu einer Überschreitung der beschriebenen Grenzwerte aus dem Stand der Technik führen oder die völlig innerhalb des Bewegungsspielraums der Zusatzachsen Platz finden, so daß diese Grenzwerte nicht negativ wirksam werden können.

**Aufgabe der Erfindung** ist es daher, eine hohe und weitgehend konstante Beschleunigung sowie eine präzise Bahnkontrolle als Vorteile einer Verwendung von redundanten translatorisch wirksamen Achsen, auch für komplexe Bahnkurven der Messeinrichtungen oder Werkzeuge gegenüber dem Mess- oder Bearbeitungsgut, für Geschwindigkeiten nutzbar zu machen, die nach dem bisherigen Stand der Technik, für derartige Achskonfigurationen, bei gegebener Weglänge des Bewegungsspielraumes der höher beschleunigbaren Zusatzachsen und gegebener maximaler Beschleunigung der längeren Basisachsen, nicht erreichbar sind.

## Beschreibung der Erfindung

Um das Geschwindigkeitspotential von Mess- oder Bearbeitungsmaschinen mit redundanten translatorisch wirksamen Achsen auf effektivere Weise nutzbar zu machen, wird gemäß dem Hauptanspruch der vorliegenden Erfindung vorgeschlagen, daß, sobald eine angestrebte konstante Bewegungsgeschwindigkeit einer Messeinrichtung oder eines Werkzeuges gegenüber dem Mess- oder Bearbeitungsgut (Vbmax) in mindestens einer der Gesamtachsen so hoch ist, oder der verfügbare Bewegungsspielraum der jeweiligen Zusatzachse (Sz) so kurz, oder die maximale Beschleunigung der jeweiligen Basisachse (Bb) so niedrig, daß der verfügbare Bewegungsspielraum der Zusatzachse (Sz) als Strecke nicht ausreicht, um bei besagter angestrebt konstanter Geschwindigkeit (Vbmax) mit der besagten maximalen Beschleunigung der Basisachse (Bb) einen vollständigen Vorzeichenwechsel in der Bewegungsgeschwindigkeit (Vbmax) auszuführen (im wesentlichen also wenn gilt Vbmax > SQRT(Sz x Bb / 2)) eine Reduzierung der Beschleunigungsvorgabe der besagten kürzeren Zusatzachsen vorgesehen ist, mindestens für jeweils die besagten kürzeren Zusatzachsen, die redundant zu den Gesamt- oder Maschinenachsen wirksam sind, in denen es zu einer der genannten Bedingungen kommt, und besagte Reduzierung der Beschleunigungsvorgabe mindestens derart erfolgt, daß die auszuführenden Bewegungen nicht zu einer Kollision der betroffenen Zusatzachsen mit den Grenzen ihres Bewegungsspielraumes führen.

Hierdurch wird eine gleichmäßigere Beschleunigung und kontinuierlichere Bewegung, über einen erhöhten Geschwindigkeitsbereich hinweg ermöglicht, als mit der Basisachse allein möglich wäre, da die Vorteile der Zusatzachsen zu einem wesentlichen Teil nutzbar bleiben.

Wie die Maximalgeschwindigkeit (Vbmax) zu ermitteln ist, wurde schon zum Stand der Technik ausgeführt. Auch wie entsprechend die Art der Steuerung, zur Ausnutzung des verfügbaren Bewegungsspielraumes der Zusatzachsen, zu berücksichtigen ist, wurde dort schon behandelt und ist entsprechend zu beachten.

Die einfachste Ausführungsvariante der Erfindung ist die Reduzierung der Beschleunigungsvorgabe der kürzeren Teilachsen auf Null, so daß also oberhalb der nach dem beschriebenen Stand der Technik bestimmten Maximalgeschwindigkeit, die gesamte notwendige Sollbewegung nur noch mittels der längeren Teilachsen (Basisachsen) einer Mess- oder Bearbeitungsmaschine erfolgt, wobei zwar kein überlagerter Betrieb im Sinne einer Aufteilung wesentlicher Bewegungsanteile zwischen Basis- und Zusatzachsen mehr erfolgt, jedoch weiterhin die Zusatzachsen genutzt werden können, um Bahnfehler der Basisachsen durch Vorabkompensation und/oder durch eine Gegenkopplung zu korrigieren.

Vorzugsweise wird dabei für jeden abgeschlossenen Bahnabschnitt einzeln vorab automatisch festgestellt, ob eine Reduzierung der Mess- oder Bearbeitungsgeschwindigkeit auf einen Wert, der eine fehlerfreie Funktion mittels simultan überlagert betriebener Achsen nach dem bisherigen Stand der Technik garantiert, oder der Betrieb nur mittels der Basisachsen, effizienter ist, und die jeweils geeignetere Betriebsart verwendet. Dieses Teilverfahren ist grundsätzlich auch für alle weiteren Ausführungsvarianten der Erfindung ergänzend verwendbar. Effizienz kann hierbei sowohl eine kürzere Ausführungszeit für den jeweiligen Bahnabschnitt bedeuten als auch durch andere Kriterien definiert sein, beispielsweise Prozesssicherheit oder Energieverbrauch während der Ausführung eines Abschnittes.

Eine effektivere Variante, zur erfindungsgemäßen Reduzierung der Beschleunigungsvorgabe, die ebenso mit Sicherheit alle Grenzsituationen vermeidet, die auf Grund einer zu engen oder zu schnellen Annäherung von Zusatzachsen, an eine Grenze ihrer Bewegungsbereiche entsteht, ist es, die Beschleunigungsvorgabe der Zusatzachsen jeweils soweit zu reduzieren, daß aus der Ausgangslage dieser Zusatzachsen heraus, bei gleichzeitiger maximaler Beschleunigung der entsprechenden Basisachsen, die angestrebte Maximalgeschwindigkeit erreicht wird, bevor die Zusatzachsen den Rand ihres Bewegungsbereiches erreichen.

Um dies beispielhaft in einer mathematischen Formel auszudrücken, sollen folgende Kurzbezeichnungen gelten:

Vbmax = angestrebte Maximalgeschwindigkeit gegenüber Mess- / Bearbeitungsgut
Vz = maximale Bewegungsgeschwindigkeit der Zusatzachse
Sz = Strecke, die für die Bewegung der Zusatzachse zur Verfügung steht
Bz = zu berechnende Beschleunigungsvorgabe der Zusatzachse
Bb = Beschleunigung der Basisachse

Beispielsweise läßt sich die aus dem bekannten Stand der Technik schon zitierte Gleichung Sz=2 Vbmax$^2$ x (1/Bb -1/(Bb+Bz)) so umformen, daß

$$Bz = 2 \, Vbmax^2 / (2 \, Vbmax^2 / Bb - Sz) - Bb$$

einen Wert ergibt, auf welchen die kürzere Achse, in ihrer Beschleunigung erfindungsgemäß reduziert wird, und die bei vorgegebener Mess- oder Berbeitungsgeschwindigkeit Vbmax, unabhängig von der Geometrie der Mess- oder Bearbeitungsbahn, immer mindestens verfügbar bleibt.

Dies stellt eine der einfachsten Ausführungsvarianten der Erfindung dar, die eine Bewegung der kürzeren Teilachsen nutzt und dennoch ohne eine Vorverarbeitung von Bahndaten auskommt.

Bei obiger Formel, die nur beispielhaft sein soll, können Werte für Bz die negativ oder größer als die maximale Beschleunigung der jeweiligen Zusatzachse sind, ignoriert werden und bedeuten, daß eine Reduktion der Beschleunigung unnötig ist. Die dargestellte Berechnung ist nur als ein Beispiel gedacht. Ebenso könnten erfindungsgemäß auch Werte anders berechnet werden, empirisch erhoben und aus vorab erstellten Tabellen ausgelesen oder zwischen solchen Werten interpoliert werden.

Auch ist nicht wesentlich ob diese Werte tatsächlich direkt die ermittelte reduzierte Beschleunigungsvorgabe darstellen, einen Faktor (vorzugsweise <=1) zur Reduzierung der Beschleunigungsvorgabe angeben, oder beispielsweise eine Zeitkonstante in einem Steuerungsprogramm, die letztlich ebenfalls einen Beschleunigungswert beeinflussen könnte und somit eine erfindungsgemäße Reduzierung der Beschleunigungsvorgabe bewirken kann.

Auch ist unwesentlich ob diese Beschleunigungsvorgabe sich auf die jeweiligen Zusatzachsen allein, oder auf eine Gesamtachse bezieht, da der jeweils alternative Wert bei Bedarf leicht ermittelbar ist.

Die Beschleunigungsmöglichkeiten sind gegenüber dem bekannten Stand der Technik, nach der zuletzt beschriebenen Ausführung, nur oberhalb der jeweiligen Maximalgeschwindigkeit vorteilhaft, die sich nach besagtem Stand der Technik für derartige redundant translatorisch wirksame Achskonfigurationen ergibt.

Bis zu dieser Maximalgeschwindigkeit wäre weiterhin ein Betrieb nach den bekannten Verfahren vorzuziehen, so daß eine erfindungsgemäße Steuerung, je nach der für den jeweiligen Prozess vorgewählten Maximalgeschwindigkeit, oder auch durch Einstellung der Maximalgeschwindigkeit während eines Prozesses bedingt, die jeweils passende Betriebsart nutzen sollte, ähnlich wie schon für die erste Variante beschrieben.

Das Wechseln zwischen den Betriebsarten sollte jedoch nur stattfinden, wenn der Gesamtstatus der gerade aktiven Achsen sich in einen Zustand befindet, der in der anzuwählenden Betriebsart berücksichtigt werden kann. Ist dies nicht gegeben, sollte der vorgewählte Wechsel vorzugsweise bis zu einem Zeitpunkt verzögert werden, in dem ein entsprechender Status vorliegt, also gewöhnlich zwischen zwei voneinander getrennt abzuarbeitenden Teilbahnen.

Statt explizit getrennter Betriebsarten, ist es erfindungsgemäß auch möglich, einen fließenden Übergang zwischen den beschriebenen Betriebsarten im Bereich einer dazu geeigneten Maximalgeschwindigkeit vorzusehen.

Es ist eher eine Frage der konkreten Auslegung der Software der Steuerung oder auf zur Vorverarbeitung genutzten externen Computern, ob sowohl je Betriebsart ein völlig unterschiedliches Steuerprogramm zur Koordination der Achsen benutzt werden kann, oder auch ein einheitliches Steuerprogramm, daß je nach gewählter Maximalgeschwindigkeit vorzugsweise kontinuierlich veränderliche Anteile unterschiedlich charakterisierter Vorgaben für Bewegungsabläufe so verbindet, daß sich ein kontinuierlich veränderlicher Betrieb ergibt.

Beispielsweise kann ein Verfahren nach der schon zitierten vorab angemeldeten Erfindung des gleichen Anmelders, mit dem hier beschriebenen Verfahren ohne weiteres so ergänzt werden werden, daß zusätzlich lediglich die erfindungsgemäße geschwindigkeitsabhängige Reduzierung der Maximalbeschleunigung der Zusatzachsen wirksam werden muß.

Grundlage ist bei allen erfindungsgemäßen Varianten, daß die Beschleunigung der kürzeren Achsen gegenüber ihrem technischen Potential gezielt reduziert wird, um eine weitgehend kontinuierliche Bewegung auch bei Maximalgeschwindigkeiten zu ermöglichen, die bei vergleichbaren Achskonfigurationen, nach dem Stand der Technik, nicht mit derart geringen Geschwindigkeitsabweichungen möglich wäre.

Dabei käme es jedoch, wegen der notwendigen Koordination aller an einer Gesamtbewegung beteiligten Maschinenachsen, zu dem Nachteil, daß auch kleine Bewegungen von der entsprechenden Reduzierung der Beschleunigungsvorgabe betroffen sind und somit eine Verminderung der Geschwindigkeit in einer wenig beschleunigten Hauptbewegungsrichtung verursachen können, obwohl diese kleinen, insbesondere transversal zur Hauptbewegungsrichtung orientierten Bewegungen, keinerlei relevante Beeinträchtigung des Bewegungsspielraumes zur Erzielung der erfindungsgemäßen Bewegungskontinuität bedeuten müssen.

Daher ist es vorteilhaft ein Regelwerk aufzustellen und vorzugsweise in die Steuerungssoftware zu implementieren, das eine Reduzierung der Beschleunigung, neben der angestrebten Maximalgeschwindigkeit, auch vom Bewegungsstatus in jeder einzelnen Teilachse und einem festen oder kontinuierlich von anderen Bewegungsparametern beeinflußbaren Korridor abhängig macht, innerhalb dessen kleinere Bewegungen mit maximaler Beschleunigung oder zumindest einer geringeren Reduzierung zugelassen werden, um die Wahrscheinlichkeit, einer durch Abhängigkeiten unterschiedlicher Maschinenachsen untereinander bedingten aber ansonsten unnötigen Abbremsung von Bewegungen, erheblich zu mindern. Insbesondere bewirkt dies, daß auch wenn mehrere Maschinenachsen an einer Bewegung beteiligt sind, kleinere unreglmäßige Bewegungssegmente, transversal zu einer Hauptbewegung, nicht sofort zu einem Abbremsen der Gesamtbewegung führen, da die kleinen Bewegungen nun ungebremst ausführbar bleiben.

Der besagte Korridor sollte vorzugsweise von einem zweiten Korridor umschlossen sein, in dem ein vorzugsweise kontinuierlicher Übergang stattfindet; zwischen der Beschleunigungsvorgabe des Inneren Korridors, für kleinste Teilbewegungen, bis hin zur Reduzierung der Beschleunigung entsprechend der schon beschriebenen Teilverfahren, beispielsweise gemäß oben gezeigter Formel, für Bewegungen, die im verbleibenden Bewegungsspielraum eine relevante Größenordnung annehmen. Beispielsweise könnte der innere Korridor 5% und der umschließende Korridor 40% des Bewegungsspielraumes einer Zusatzachse betragen, und eine Abnahme der Ausdehnungen der besagten Korridore könnte erfolgen, je weiter die jeweiligen Zusatzachsen aus ihrer Ruhelage entfernt sind und umso schneller sich die jeweiligen redundant wirkenden Zusatz- und Basisachsen insgesamt bewegen.

Hierfür feste Vorgaben zu machen ist nicht sinnvoll, da schon anhand der genannten Verfahrensdetails und den zahlreichen denkbaren Anwendungsfällen dem Fachmann möglich ist, eine große Vielzahl von speziellen Bedingungen und Regelwerken zur Anwendung der Erfindung zu entwickeln, die alle effizienter sein können, als der bisherige Stand der Technik ermöglicht hätte, aber dennoch auf sehr spezielle Anforderungen hin zusätzlich optimiert.

Durch eine Vorverarbeitung der Bahndaten, entweder in einem beliebigen Computer oder der verwendeten CNC-Steuerung, ist eine nochmals bessere Ausnutzung der Beschleunigungspotentiale einer Achskonfiguration mit redundant translatorisch wirksamen Achsen möglich, wobei die steuerungsinterne Vorverarbeitung auch zeitlich überlagert mit einer Messung oder Bearbeitung, beispielsweise als sogenanntes "look ahead" Verfahren, stattfinden kann.

Vorverarbeitungsverfahren zur Koordination der Bewegung mehrerer Achsen, auch solche nach dem "look ahead" Verfahren, sind dem Fachmann schon seit langem bekannt und müssen daher als solche hier nicht grundsätzlich erörtert werden.

Eine erfindungsgemäße Vorverarbeitung der Bahndaten zeichnet sich dadurch aus, daß die resultierenden Steuerdaten für die Achsantriebe durch gezielte Reduzierung der Beschleunigungsvorgaben für die Zusatzachsen einer entsprechenden Achskonfiguration, eine weitgehend bruchlos, kontinuierlich beschleunigte und bewegte Messung und Bearbeitung bei hoher Geschwindigkeit ermöglichen, insbesondere bei Mess- oder Bearbeitungsgeschwindigkeiten, die höher sind, als bei gegebenem Bewegungsspielraum der Zusatzachsen und gegebener Beschleunigung der Basisachsen, nach dem bisher bekannten Stand der Technik möglich wäre.

Eine erfindungsgemäße Vorverarbeitung, kann derart realisiert sein, daß zunächst das Durchfahren der vorgegebenen Mess- oder Bearbeitungsprogramme anhand der oben beschriebenen Regeln zur Reduzierung der Beschleunigung der Zusatzachsen simuliert wird und die entstehenden Steuerdaten parallel zu den Bahndaten, in einer möglichst feinen Positionsrasterung abgelegt werden. Dies ergibt schon einmal grundsätzlich mögliche Bahndaten, in denen die Komponenten der Teilsystem in kleinsten Bahnschritten simultan berücksichtigt sind.

Dann können diese Daten daraufhin geprüft werden, ob insbesondere eine geringe Auslenkung der jeweilig kürzeren Teilachsen aus ihrer Mittelstellung, eine relativ niedrige Bewegungsgeschwindigkeit aller beteiligter Teilachsen oder nur relativ kleine aktuell auszuführende Bewegungen vorliegen, was Indizien für die Möglichkeit einer Optimierung der Beschleunigungsvorgabe für die Zusatzachsen wären. Ein Bahndatenbereich für den dies zusammenhängend gilt, wird bestimmt und anhand einer nochmaligen Simulation mit, je nach vorgefundenen Datenmaterial, mit passend abgeschwächter Reduzierung der Beschleunigung, aktualisiert. Nach dem gleichen Muster werden auch die restlichen Bahndaten bearbeitet und das Resultat zur Steuerung der Achsen verwendet.

Eine weitere erfindungsgemäße Ausführungsvariante ist es, einmal nach einem der schon beschriebenen Muster solche Bahndaten zu erzeugen, die eine grundsätzlich korrekte Bewegung erlauben und zusätzlich, parallel vergleichbar über den Sollpositionsverlauf, die Daten für einen Referenzbahnverlauf zu erzeugen, beispielsweise durch Simulation einer Achskonfiguration die eine entsprechenden Bewegungsspielraum der Zusatzachsen in der Simulation vorsieht, als ob ein Betrieb ohne Beschleunigungsreduzierung möglich wäre. Werden diese Daten nun Sollpositionsparallel verglichen, lassen sich solche Bereiche programmgesteuert ermitteln, in denen es möglich und zugleich günstiger ist, die Bahndaten des zusätzlichen Durchlaufes zu benutzen, und beispielsweise mit mehr oder weniger langen Übergangszonen, in denen die Beschleunigungsvorgabe kontinuierlich angepasst wird, in die resultierenden Bahndaten einzufügen.

Bei derartigen Verfahren ist es auch möglich, die Bahndaten nicht sequentiell für jeweils ein ganzes Mess- oder Bearbeitungsprogramm zu erzeugen, sondern zeitlich parallel zur Messung oder Bearbeitung, und während des Verfahrens der Achsen, immer dem aktuellen Bahnbereich ausreichend weit voraus, in einem dazu temporär genutzten Speicherbereich, der laufend neu überschrieben wird, wenn die vorherigen Bahnabschnitte schon abgearbeitet sind.

Dies birgt jedoch, je nach Größe eines derartigen "look ahead" Bereiches, das Risiko entweder die optimalen Beschleunigungsmöglichkeiten nicht immer zu nutzen, oder aber in kritischen Bahnverläufen, auf Punkte zu stoßen, die eine nichtkontinuierliche Korrektur der Teilachsen erfordern könnten. Daher ist dies zu berücksichtigen. Durch die große Verarbeitungsleistung und Speicherkapazitäten aktueller Computer und hierauf basierenden Steuerungen, kann dieses Risiko jedoch mit ausreichendem Aufwand vernachlässigbar klein gehalten werden.

Des weiteren kann erfindungsgemäß vorgesehen sein, daß auch bei einer relativ hohen Gesamtgeschwindigkeit, unabhängig von der besagten Reduzierung der Beschleunigungsvorgabe, relativ kleine Bewegungen, insbesondere solche zur Korrektur der Gesamtbewegung mittels einer Vorabkompensation und/oder Gegenkopplung, mit der vollen Beschleunigung der Zusatzachsen ausführbar bleiben.

Dies kann beispielsweise durch einen, entsprechend der maximal zu erwartenden Korrekturbewegungen, verkleinert angenommenen Bewegungsspielraum der Zusatzachsen, bei den Berechnungen zur Reduzierung der Beschleunigungsvorgaben berücksichtigt werden, so daß dann in jedem Fall dieser derart reservierte Bereich für hochbeschleunigte Bewegungen zur Verfügung steht.

Gegebenenfalls kann dieser Bereich als minimaler unveränderlicher Teil des schon beschriebenen inneren Korridors, für kleine Bewegungen mit abgeschwächter Reduzierung oder ohne jede Reduzierung der Beschleunigungsvorgabe, berücksichtigt werden.

Als redundante translatorische Bewegungsmöglichkeit kann auch gelten kann, wenn rotatorisch oder parallelkinematisch wirkende Teilbewegungsvorrichtungen, neben ihren typischen Bewegungsmöglichkeiten oder ausschließlich, innerhalb eines anwendungsabhängig ausreichend kleinen Bewegungsbereiches, für eine redundante translatorische Bewegung einer Messeinrichtung oder eines Werkzeuges genutzt werden können.

Die Art der Basisachsen, als auch der Zusatzachsen, von Maschinen die entsprechend der Erfindung betrieben werden, kann mechanisch sehr vielfältig realisiert sein.

Für Basisachsen werden gewöhnlich Linearantriebe, Hohlwellenmotore, Zahnstangentriebe oder Kugelgewindespindeln zum Einsatz kommen, während für die Zusatzachsen, je nach benötigtem Bewegungsspielraum und Größendimension der Anwendung, neben Linearantrieben und möglichst direkt angetriebenen Kugelgewindespindeln auch piezoelektrisch, elektrodynamisch ("voice coils"), hydraulisch oder pneumatisch wirksame Antriebe verwendbar sein können.

Genauso ist auch der Einsatz von um eine Achse drehbarer oder parallelkinematisch bewegbarer Maschinenteile als entsprechend linear wirkende Zusatzachse innerhalb eines engen Winkelbereiches möglich, wie beispielsweise schwenkbare Laserschneidköpfe oder parallelkinematisch bewegbare Fräsköpfe.

Eine Mess- oder Werkzeugmaschine kann erfindungsgemäß beispielsweise für den Schiff- oder Flugzeugbau zum Vermessen und Bearbeiten größter Bauteile in höchster Detailkomplexität vorteilhaft konzipiert werden, oder für eher alltägliche Dimensionen, beispielsweise in der Größe von Autokarosserien, Waschmaschinen oder Platinen für elektronischen Schaltungen, bis hinunter in in die Dimensionen von Zentimetern oder Bruchteilen von Millimetern, für die Abmessungen eines zu vermessenden oder zu bearbeitenden Werkstückes in der Mikrosystemtechnik, Mikroelektronik oder der Nanotechnologie.

Die Grundproblematik - die Größe eines möglichst ununterteilten Arbeitsraumes im Verhältnis zu den zu berücksichtigenden Details einerseits und immer höhere Mess- oder Bearbeitungsgeschwindigkeiten, bei nur begrenzt vergrößerbarem Bewegungsspielraum von redundant gegenüber trägen Basisachsen wirksamen agilen Zusatzachsen, andererseits - nimmt tendenziell immer mehr zu und damit zugleich der Bedarf für höchstmögliche konstant verfügbare Beschleunigungen bei möglichst kontinuierlichen Mess- und Bearbeitungsgeschwindigkeit an komplexen Konturen und Strukturen und somit an entsprechend komplexen Bahnkurven. Dabei ermöglicht die Erfindung eine stark verbesserte Anwendbarkeit von Maschinen, die aufgrund ihrer mechanischen Konfiguration und bei einer Koordination der Achsbewegungen nach dem bisherigen Stand der Technik, nur für deutlich niedrigere weitgehend konstante Mess- und Bearbeitungsgeschwindigkeiten geeignet wären.

Bearbeitungsmethoden für die sich ein erfindungsgemäßes Verfahren besonders eignet, sind das Schweißen, Schneiden, Fräsen, Gravieren, Markieren, Aufbringen von komplexen Konturen und Strukturen auf eher flachen Materialien, wie Blechen, Kunststoffen, Glas, Keramiken, Holz und Textilien.

Ebenso ist das Rapid Prototyping eine geeignete Anwendung, insbesondere Verfahren in denen Schichten zugeschnitten, Material kleinräumig aufgetragen wird oder mit einem möglichst senkrecht zum Material ausgerichteten Energiestrahl gearbeitet werden muß, beispielsweise um einen möglichst gleichmäßigen und exakt reproduzierbaren Energieeintrag zu erhalten.

Ferner sind das präzise Bearbeiten kleinster Strukturen oder das präzise Auf- und Abtragen feinster Details mit hoher Geschwindigkeit genauso mögliche Anwendungen der vorliegenden Erfindung, wie auch das Messen und Kontrollieren in den genannten Bereichen, wobei diese nur als Beispiele zu verstehen sind und keine in irgend einer Weise abschließende Aufzählung von Anwendungsmöglichkeiten der Erfindung darstellen sollen.

Bevorzugte Ausführungsbeispiele der Erfindung sind in der Zeichnung schematisch dargestellt und werden nachfolgend mit Bezug zu den Figuren der Zeichnung näher erläutert. Es zeigt:

Fig. 1    eine Werkzeugmaschine mit einem in zwei Achsrichtungen bewegbaren Werkzeug und einer Zusatzachse;

Fig. 2    eine Werkzeugmaschine mit fünf Achsrichtungen;

Fig. 3      eine stark schematisierte Darstellung einer Basisachse und Zusatzachse;

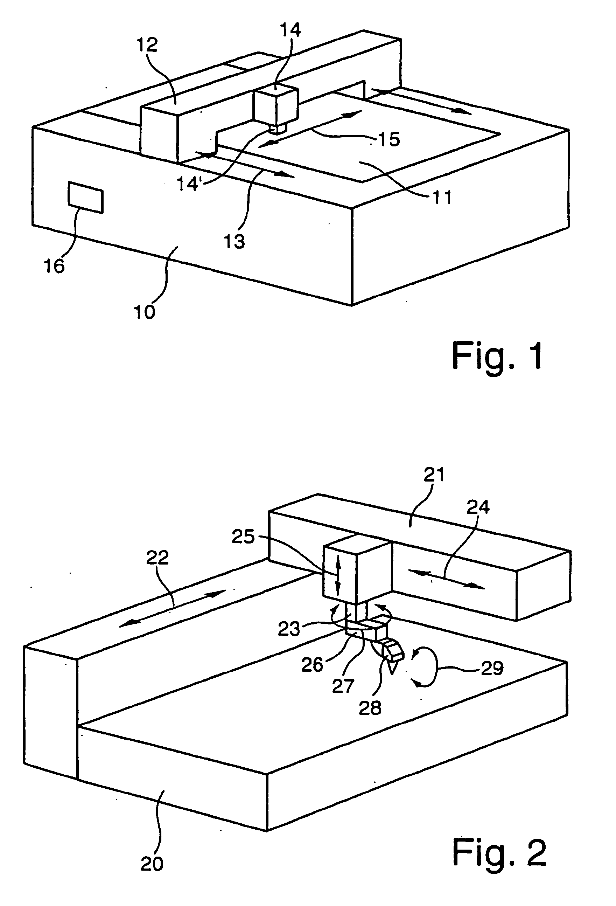

In der Fig. 1 ist eine Werkzeugmaschine 10 dargestellt, bei der ein Werkstück 11 ortsfest angeordnet ist. Ein Portal 12 ist entlang der Achsrichtung 13 bewegbar. An dem Portal 12 ist eine Einrichtung 14 angeordnet, an der wiederum ein Werkzeughalter 14' angeordnet ist, der ein Werkzeug halten kann. Die Einrichtung 14 (und damit der Werkzeughalter 14' samt Werkzeug) ist in Achsrichtung 15 bewegbar. Der Werkzeughalter 14' ist bezüglich der Einrichtung 14 ebenfalls in Achsrichtung 13 beweglich.

Aus der Fig. 1 ist ersichtlich, dass der Werkzeughalter 14' (mit Werkzeug) eine geringere Masse aufweist als die Einrichtung 14, die als Schlitten bezeichnet werden kann. Das Portal 12 mit zugehörigen Antrieben stellt eine erste in Ausrichtung 13 wirkende Teilachse dar und wird als Basisachse bezeichnet, während der Werkzeughalter 14' mit zugehörigem Antrieb eine in Achsrichtung 13 wirkende zweite Teilachse, die Zusatzachse, darstellt. Die Basisachse hat einen größeren Bewegungsbereich und geringere Beschleunigung als die Zusatzachse. Die Bewegungen in den Achsenrichtungen 13, 15 werden durch eine Steuerung 16 gesteuert.

In der Fig. 2 ist eine Werkzeugmaschine 20 dargestellt, bei der ein Arm 21 entlang der Achsrichtung 22 bewegbar ist. Entlang dem Arm 21 ist eine Einrichtung 23 in Achsrichtung 24 bewegbar. Die Einrichtung 23 ist zusätzlich in Achsrichtung 25 bewegbar. Durch die Achsrichtungen 22, 24, 25 werden die X-, Y-, Z-Richtung eines kartesischen Koordinatensystems festgelegt. Ein Ausleger 26 ist in Achsrichtung 27 rotierbar. An dem Ausleger 26 ist ein Laserschneidkopf 28 als Werkzeug angeordnet, der wiederum in Achsrichtung 29 rotierbar ist.

In einem geringen Bewegungsausschnitt ist die Bewegung des Laserschneidkopfes 28 im Wesentlichen parallel zur Achsrichtung 22, so dass eine Bewegung des Kopfes 28 in einem Bereich eine translatorische Bewegung parallel zur Bewegung des Armes 21 in Achsrichtung 22 bewirken kann und daher der Laserschneidkopf 28 samt seinem Antrieb als (translatorische) Zusatzachse betrachtet werden kann.

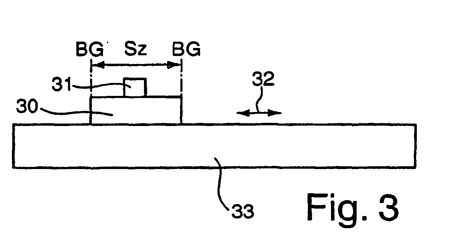

In der Figur 3 ist nochmals stark schematisiert ein Schlitten 30 gezeigt, der relativ zur Führung 33 bewegbar ist und eine Basisachse bzw. einen Bestandteil einer solchen darstellt. Darauf ist eine Einrichtung 31 angeordnet, die eine Zusatzachse bzw. einen Bestandteil einer solchen darstellt. Sowohl der Schlitten 30 als auch die Einrichtung 31 können in Doppelpfeilrichtung 32 beschleunigt werden. Dabei kann der Schlitten 30 relativ zu der Führung 33 mit der Beschleunigung Bb (Beschleunigung der Basisachse) und die Einrichtung 31 relativ zum Schlitten 30 mit der Beschleunigung Bz (Beschleunigung der Zusatzachse) beschleunigt werden. Die maximale Sollgeschwindigkeit der Basisachse bzw. des Schlittens 30 beträgt Vbmax und die maximale Sollgeschwindigkeit der Zusatzachse bzw. der Einrichtung 31 beträgt 2 x Vbmax. Ein an der Einrichtung 31 befestigtes Werkzeug oder eine Messeinrichtung kann gegenüber einem Werkstück mindestens mit der Beschleunigung Bz beschleunigt werden. Die gestrichelten Linien BG stellen die Bereichsgrenzen des Bewegungsspielraums Sz der Zusatzachse dar.

**Patentansprüche**

1.  Verfahren zur optimierten Bewegungskoordination von Mess- oder Werkzeugmaschinen (10,20) mit redundanten translatorisch wirksamen Achsen (15,14,22,24,25,27,29).
    wobei die redundanten translatorisch wirksamen Achsen, linear bewegbare Teil (14,14') einer Gesamtbewegungsvorrichtung, zur mindestens zweidimensionalen Gesamtbewegung von Messeinrichtungen oder Werkzeugen, relativ zu einem mit beliebigen Verfahren abzutastenden oder zu bearbeitenden Mess- oder Bearbeitungsgut bilden,
    wobei als redundante translatorische Bewegungsmöglichkeit auch gelten kann, wenn rotatorisch oder parallelkinematisch wirkende Teilbewegungsvorrichtungen (23,26,28),
    innerhalb eines anwendungsabhängigen Bewegungsbereiches, für eine redundante translatorische Bewegung einer Messeinrichtung oder eines Werkzeuges genutzt werden können,
    wobei die jeweils über eine längere Strecke bewegbaren Teilachsen, hier Basisachsen (32) genannt, eine niedrig beschleunigte Teilbewegung,
    über den gesamten Mess- oder Bearbeitungsraum, ermöglichen und die jeweils über eine kürzere Strecke bewegbaren Teilachsen, hier zusatzachsen (Sz) genannt, die Bewegungsanteile einer Gesamtbewegung ausführen, die eine Beschleunigung jenseits eines für die Basisachsen festgestellten oder festgesetzten Maximums erfordern,
    wobei die Gesamtkoordination aller Achsen unmittelbar während eines Mess- oder Bearbeitungsvorganges stattfinden kann, oder in einer fließenden abschnittweisen Vorverarbeitung während eines Mess- oder Bearbeitungsvorganges, oder als Teil einer kompletten Vorverarbeitung eines gesamten Mess- oder Bearbeitungsvorganges, **dadurch gekennzeichnet, daß** sobald eine angestrebte konstante Bewegungsgeschwindigkeit einer Messeinrichtung oder eines Werkzeuges gegenüber dem Mess- oder Bearbeitungsgut (Vbmax) in mindestens einer der Gesamtachsen so hoch ist,
    oder der Bewegungsspielraum der jeweiligen Zusatzachse (Sz) so kurz,
    oder die Beschleunigung der jeweiligen Basisachse (Bb) so niedrig,

daß der Bewegungsspielraum der Zusatzachse (Sz) als Strecke nicht ausreicht, um bei besagter angestrebt konstanter Geschwindigkeit (Vbmax) mit der besagten maximalen Beschleunigung der Basisachse (Bb) einen vollständigen Vorzeichenwechsel in der Bewegungsgeschwindigkeit (Vbmax) auszuführen, eine Reduzierung der Beschleunigungsvorgabe der besagten kürzeren Zusatzachsen vorgesehen ist, mindestens für jeweils die besagten kürzeren Zusatzachsen, die redundant zu den Gesamt- oder Maschinenachsen wirksam sind, in denen es zu einer der genannten Bedingungen kommt,

und besagte Reduzierung der Beschleunigungsvorgabe mindestens derart erfolgt, daß die auszuführenden Bewegungen nicht zu einer Kollision der betroffenen Zusatzachsen mit den Grenzen ihres Bewegungsspielraumes führen.

2.  Verfahren gemäß Anspruch 1,
    **dadurch gekennzeichnet, daß** besagte Reduzierung der Beschleunigungsvorgabe erfolgt, indem die Beschleunigung mindestens der jeweilig von der besagten Reduzierung betroffenen kürzeren Teilachsen auf Null gesetzt wird, also keine Bewegung in den entsprechenden kürzeren Teilachsen ausgeführt wird.

3.  Verfahren gemäß Anspruch 1,
    **dadurch gekennzeichnet, daß** besagte Reduzierung der Beschleunigungsvorgabe erfolgt, indem die Einstellung einer angestrebt konstanten Bewegungsgeschwindigkeit, vor oder während eines Mess- oder Bearbeitungsvorganges, unabhängig davon, ob solche Einstellung durch Voreinstellungen einer Maschinenkonfiguration, Benutzereingabe oder entsprechenden Anweisungen in Mess- oder Bearbeitungsprogrammen bedingt sind, zu einer jeweils entsprechend reduzierten Beschleunigung der jeweilig betroffenen kürzeren Teilachsen führen können.

4.  Verfahren gemäß Anspruch 3,
    **dadurch gekennzeichnet, daß** besagte reduzierte Beschleunigungsvorgabe direkt über entsprechende Berechnungen, vorbereitete Tabellenwerte oder Interpolation über derartige Werte bestimmt wird.

5.  Verfahren gemäß Ansprüchen 3 und 4,
    **dadurch gekennzeichnet, daß** besagte Reduzierung der Beschleunigungsvorgabe lediglich als Richtwert behandelt wird,
    wobei die Beschleunigungsvorgabe in Abhängigkeit vom Bewegungsstatus, aller oder eines Teiles der an der Gesamtbewegung beteiligten Teilachsen, verändert werden kann zwischen dem besagten Richtwert bis hin zu einer völligen Aufhebung der Reduzierung der Beschleunigungsvorgabe,
    und besagter Bewegungsstatus durch einen oder mehrere der jeweils aktuell meßbaren oder wirksamen Parameter bestimmt wird.

6.  Verfahren gemäß Anspruch 5,
    **dadurch gekennzeichnet, daß** im besagten Bewegungsstatus einer oder mehrere der folgenden Parameter berücksichtigt werden und zu einer Erhöhung der Beschleunigungsvorgabe führen können, tendenziell um so stärker, je kleiner sie sind:

    a. Aktuelle Auslenkung der jeweiligen Zusatzachsen aus ihrer Mittelstellung
    b. Aktuelle Bewegungsgeschwindigkeit aller berücksichtigten Teilachsen
    c. Unmittelbar folgende auszuführende Bewegungen,

7.  Verfahren gemäß Ansprüchen 5 und 6,
    **dadurch gekennzeichnet, daß** für Zusatzachsen jeweils ein Teil ihres Bewegungsspielraumes als Korridor mit abgeschwächter Reduzierung oder ohne jede Reduzierung besagter Beschleunigungsvorgabe nutzbar bleibt.

8.  Verfahren gemäß Anspruch 7,
    **dadurch gekennzeichnet, daß** besagter Korridor mit abgeschwächter Reduzierung oder ohne Reduzierung der Beschleunigungsvorgabe in seiner Ausdehnung abhängig vom besagten Bewegungsstatus ist.

9.  Verfahren gemäß Ansprüchen 7 und 8,
    **dadurch gekennzeichnet, daß** für Zusatzachsen jeweils gegenüber dem besagten Korridor ein ausgedehnterer zweiter Korridor vorgesehen ist, in dem ein allmählicher Übergang der Wirksamkeit der Beschleunigungsreduktion vom Wert des inneren Korridors, hin zur besagten reduzierten Beschleunigungsvorgabe aus den verfahrensmäßig vorangehenden Teilverfahren stattfindet.

**10.** Verfahren gemäß Anspruch 9,
**dadurch gekennzeichnet, daß** besagter zweiter Korridor in seiner Ausdehnung abhängig vom besagten Bewegungsstatus ist.

**11.** Verfahren gemäß Ansprüchen 5 bis 10,
**dadurch gekennzeichnet, daß** eine datentechnische Vorverarbeitung des ganzen oder eines genügend langen jeweils bevorstehenden Bahnverlaufes, eines jeweiligen Mess- oder Bearbeitungsvorganges stattfindet, und jeweils im Bahnverlauf bevorstehende Abschnitte mit in die Berechnung der besagten Beschleunigungsvorgabe einbezogen werden.

**12.** Verfahren gemäß Ansprüchen 3 bis 11,
**dadurch gekennzeichnet, daß** besagte Reduzierung der Beschleunigungsvorgabe lediglich als Richtwert behandelt wird, und, eine datentechnische Vorverarbeitung des Bahnverlaufes, eines jeweiligen Mess- oder Bearbeitungsvorganges, stattfindet, wobei

> a. der zu erwartende Bewegungsverlauf aller Teilachsen,
> auf Basis der vorgegebenen Richt- oder Maximalwerte bestimmt wird,
> b. der zu erwartende Bewegungsvertauf aller Teilachsen auf Basis der Annahme bestimmt wird, daß die besagten Bedingungen, die zur besagten Reduzierung der Beschleunigung geführt haben, nicht vorliegen würden
> c. durch positionsparallelen Vergleich der Bewegungsverläufe aus a) und b) festgestellt wird, ob alle Achsen sich innerhalb des Bewegungsverlaufes aus a) im wesentlichen in einem Status befinden, der das Ausführen von Bewegungsverläufen mittels hoher Beschleunigungen entsprechend des Bewegungsverlaufes aus b) erlaubt,

und die Daten aus den Bewegungsverläufen von a) und b) entsprechend zu einem resultierenden Bewegungsverlauf kombiniert werden, wobei bei Vorliegen der genannten Bedingung die Daten aus b) verwendet werden. und Übergangsbereiche zwischen besagten Bewegungsverläufen zur Anpassung an die jeweils wirksame Beschleunigungsvorgabe vorgesehen sind.

**13.** Verfahren gemäß einem der vorstehenden Ansprüche,
**dadurch gekennzeichnet, daß** unabhängig von der besagten Reduzierung der Beschleunigung, Bewegungen mit der maximalen Beschleunigung der Zusatzachse für korrigierende Signale einer Vorkompensation oder Gegenkopplung ausführbar bleiben.

**14.** Verfahren gemäß Anspruch 13,
**dadurch gekennzeichnet, daß** der notwendige Bewegungsspielraum für besagte relativ kleine Bewegungen mit der maximalen Beschleunigung der Zusatzachse, vom Gesamtbewegungsspielraum der Zusatzachse abgezogen wird und dies in anderen Verfahrensschritten berücksichtigt ist.

**15.** Verfahren gemäß einem der vorstehenden Ansprüche,
**dadurch gekennzeichnet, daß** für den abzuarbeitenden Bahnverlauf automatisch eine vergleichende Simulation durchgeführt wird, zum Vergleich zwischen einer erfindungsgemäßen Verminderung der Beschleunigungsvorgabe von Zusatzachsen und einer Verminderung der besagten angestrebten konstanten Geschwindigkeit auf einen Wert, der auch ohne Verminderung der besagten Beschleunigungsvorgabe nutzbar wäre, und das jeweils effizientere Verfahren zur Ausführung kommt.

**16.** Verfahren gemäß Anspruch 15,
**dadurch gekennzeichnet, daß** der gesamte abzuarbeitende Bahnverlauf in einzeln ausführbare Abschnitte aufgeteilt wird und für jeden dieser Abschnitte besagter Vergleich durchgeführt wird und das jeweils effizientere Verfahren zur Ausführung kommt.

**17.** Verfahren gemäß Ansprüchen 15 und 16,
**dadurch gekennzeichnet, daß** die besagte Effizienz an mindestens einem der folgenden Kriterien gemessen wird, :

> a. Ausführungszeit
> b. Prozesssicherheit (Beispiel: Geschwindigkeitseinbrüche - Anzahl, Anteil, Intensität)
> c. Energieeinsatz

**Claims**

1. A method for the optimised movement co-ordination of measuring machines or machine tools (10, 20) having redundant axes (15, 14, 22, 24, 25, 27, 29) having a translatory action,

wherein the redundant axes having a translatory action form linearly movable parts (14, 14') of a total movement device, for at least two-dimensional total movement of measuring devices or tools relative to a material to be scanned or to be processed with any desired methods,

wherein a possible redundant translatory movement is also considered to be when rotatory or parallel kinematically acting partial movement devices (23, 26, 28), within an application-dependent movement range, can be used for a redundant translatory movement of a measuring device or a tool,

wherein the partial axes each movable over a relatively long distance, called base axes (32) here, permit a slowly accelerated partial movement across the entire measuring or processing space, and the partial axes each movable over a relatively short distance, called additional axes (Sz) here, perform the movement components of a total movement that require an acceleration beyond a maximum established or stipulated for the base axes,

wherein the overall co-ordination of all axes can take place directly during a measuring or processing operation, or in a smooth section-wise pre-processing during a measuring or processing operation, or as part of a complete pre-processing of an entire measuring or processing operation,

**characterised in that** as soon as a desired constant movement speed of a measuring device or a tool with respect to the material to be measured or processed (Vbmax) in at least one of the overall axes is so high,

or the movement range of the particular additional axis (Sz) is so short,

or the acceleration of the particular base axis (Bb) is so slow,

that the movement range of the additional axis (Sz) is insufficient as a distance in order, at the said desired constant speed (Vbmax) with the said maximum acceleration of the base axis (Bb), for a complete change of sign in the speed of movement (Vbmax) to be performed, provision is made for a reduction in the acceleration default value of the said shorter additional axes, at least for the said shorter additional axes acting redundantly with respect to the overall or machine axes, in which one of the said conditions occurs, and said reduction in the acceleration default value is effected at least in such a way that the movements to be performed do not lead to a collision of the additional axes concerned with the boundaries of their movement range.

2. A method according to claim 1,
   **characterised in that** the said reduction in the acceleration default value is effected by the acceleration of at least the particular shorter partial axes affected by the said reduction being set to zero, that is, no movement is performed in the corresponding shorter partial axes.

3. A method according to claim 1,
   **characterised in that** the said reduction in the acceleration default value is effected **in that** the setting of a desired constant speed, before or during a measuring or processing operation, irrespective of whether such a setting is caused by presettings of a machine configuration, user input or corresponding commands in the measuring or processing programs,
   can lead to a correspondingly reduced acceleration of the particular shorter partial axes concerned.

4. A method according to claim 3,
   **characterised in that** said reduced acceleration default value is determined directly via corresponding calculations, prepared tabular values or interpolation across such values.

5. A method according to claims 3 and 4,
   **characterised in that** said reduction in the acceleration default value is treated merely as a guide value, wherein the acceleration default value can be altered as a function of the movement status of all or some of the partial axes participating in the total movement, between the said guide value up to a complete cancellation of the reduction in the acceleration default value and said movement status is determined by one or more of the at any one time currently measurable or effective parameters.

6. A method according to claim 5,
   **characterised in that** in the said movement status one or more of the following parameters are taken into account and can lead to an increase in the acceleration default value, the tendency for this being greater the smaller they are:

   a: current deflection of the particular additional axes from their middle position
   b: current movement speed of all partial axes considered

c: directly following movements to be performed.

**7.** A method according to claims 5 and 6,
**characterised in that**, for additional axes, in each case a part of their movement range remains useable as a corridor with weakened reduction or without any reduction of the said acceleration default value.

**8.** A method according to claim 7,
**characterised in that** said corridor with weakened reduction or with no reduction of the acceleration default value is dependent in its extent on the said movement status.

**9.** A method according to claims 7 and 8,
**characterised in that**, for additional axes, in each case opposite the said corridor a more extensive corridor second corridor is provided, in which a gradual transition of the effectiveness of the acceleration reduction from the value of the inner corridor to the said reduced acceleration default value from the procedurally preceding partial processes takes place.

**10.** A method according to claim 9,
**characterised in that** the extent of said second corridor is dependent on the said movement status.

**11.** A method according to claims 5 to 10,
**characterised in that** a data pre-processing of the entire or a sufficiently long in each case imminent course of the path of a particular measuring or processing operation takes place, and in each case sections imminent in the course of the path are included in the calculation of the said acceleration default value.

**12.** A method according to claims 3 to 11,
**characterised in that** said reduction in the acceleration default value is treated merely as a guide value, and a data pre-processing of the course of the path of a particular measuring or processing operation takes place, wherein

a. the expected movement course of all partial axes is determined on the basis of the predetermined guide or maximum values,
b. the expected movement course of all partial axes is determined on the basis of the assumption that the said conditions that have led to the said reduction in the acceleration would not exist,
c. by position-parallel comparison of the movement courses from a) and b) it is established whether all axes within the movement course from a) are substantially in a status that permits the execution of movement courses by means of high accelerations corresponding to the movement course from b), and the data from the movement courses of a) and b) are correspondingly combined to a resulting movement course, wherein in the presence of the said condition the data from b) are used and transition regions between said movement courses are provided for adaptation to the acceleration default value effective in each case.

**13.** A method according to any one of the preceding claims, **characterised in that**, irrespective of the said reduction in the acceleration, movements at the maximum acceleration of the additional axis remain performable for correcting signals of a pre-compensation or counter-coupling.

**14.** A method according to claim 13,
**characterised in that** the necessary movement range for said relatively small movements at the maximum acceleration of the additional axis is subtracted from the total movement range of the additional axis and this is taken into account in other process steps.

**15.** A method according to any one of the preceding claims, **characterised in that**, for the path course to covered a comparative simulation is automatically carried out, for comparison between a reduction according to the invention in the acceleration default value of additional axes and a reduction in the said desired constant speed to a value that would be usable even without a reduction in the said acceleration default value, and in each case the more efficient process is performed.

**16.** A method according to claim 15,
**characterised in that** the entire path course to be covered is divided into individually performable sections and for each of these sections the said comparison is carried out and in each case the more efficient process is performed.

**17.** A method according to claims 15 and 16,
**characterised in that** the said efficiency is measured by at least one of the following criteria:

  a. execution time
  b. processing reliability (example: speed problems - number, proportion, intensity)
  c. energy input.

**Revendications**

**1.** Procédé de coordination optimalisée des mouvements de machines de mesure ou de machines-outils (10, 20) à axes redondants (15, 14, 22, 24, 25, 27, 29) opérant en translation,
lesdits axes redondants, opérant en translation, matérialisant des parties (14, 14') linéairement mobiles d'un dispositif de mouvement intégral affecté au mouvement intégral, au moins bidimensionnel, de systèmes de mesure ou d'outils par rapport à un objet mesuré ou travaillé, devant être exploré ou usiné par de quelconques procédés,
une faculté redondante de mouvement translatoire pouvant également être réputée offerte lorsque des dispositifs (23, 26, 28) de mouvement partiel, agissant en mode rotatif ou avec cinématique parallèle, peuvent être utilisés dans les limites d'une plage de mouvements tributaire de l'application, en vue d'un mouvement translatoire redondant d'un système de mesure ou d'un outil,
les axes partiels désignés par « axes fondamentaux » (32) dans le présent contexte, respectivement mobiles sur un trajet de longueur supérieure, autorisant un mouvement partiel à faible accélération sur la totalité de l'espace de mesure ou d'usinage ; et les axes partiels désignés par « axes additionnels » (Sz) dans le présent contexte, respectivement mobiles sur un trajet de longueur moindre, exécutant les fractions d'un mouvement intégral qui réclament une accélération au-delà d'un maximum fermement établi ou fermement instauré pour lesdits axes fondamentaux,
la coordination d'ensemble de tous les axes pouvant avoir lieu directement au cours d'un processus de mesurage ou d'usinage ; ou lors d'un traitement préalable continu et segmenté, au cours d'un processus de mesurage ou d'usinage ; voire en tant que partie d'un traitement préalable intégral d'un processus global de mesurage ou d'usinage, **caractérisé par le fait que**,
dès l'instant auquel une vitesse de mouvement constante recherchée (Vbmax) d'un système de mesure ou d'un outil présente, suivant au moins l'un des axes globaux, une valeur tellement élevée par rapport à l'objet mesuré ou travaillé,
ou auquel la latitude de mouvement (Sz) de l'axe additionnel considéré présente une valeur tellement restreinte, voire auquel l'accélération (Bb) de l'axe fondamental considéré présente une valeur tellement faible que ladite latitude de mouvement (Sz) dudit axe additionnel ne suffit pas, en tant que trajet, pour induire un changement de signe complet dans la vitesse de mouvement (Vbmax) avec ladite accélération maximale (Bb) dudit axe fondamental en présence de ladite vitesse constante recherchée (Vbmax), une réduction de la consigne d'accélération desdits axes additionnels plus courts est prévue, au moins pour lesdits axes additionnels plus courts respectifs qui opèrent avec redondance vis-à-vis des axes globaux, ou axes de la machine, pour lesquels se présente l'une des conditions précitées,
et ladite réduction de la consigne d'accélération a lieu au moins de façon telle que les mouvements, devant être effectués, n'impliquent pas une collision des axes additionnels concernés avec les limites de leur latitude de mouvement.

**2.** Procédé selon la revendication 1,
**caractérisé par le fait que** la réduction précitée de la consigne d'accélération est effectuée en ramenant à zéro l'accélération d'au moins les axes partiels plus courts, respectivement concernés par ladite réduction, c'est-à-dire qu'aucun mouvement n'est exécuté suivant les axes partiels plus courts correspondants:

**3.** Procédé selon la revendication 1,
**caractérisé par le fait que** la réduction précitée de la consigne d'accélération est effectuée de façon telle que le réglage d'une vitesse de mouvement constante recherchée, avant ou pendant un processus de mesurage ou d'usinage,
puisse impliquer une accélération conséquemment réduite des axes partiels plus courts, respectivement concernés, indépendamment de l'éventualité qu'un tel réglage soit conditionné par des réglages préalables d'une configuration de machine, par des instructions entrées émanant d'un utilisateur, ou par des directives correspondantes incluses dans des programmes de mesurage ou d'usinage.

**4.** Procédé selon la revendication 3,
**caractérisé par le fait que** la consigne d'accélération réduite susmentionnée est déterminée directement par des calculs correspondants, par des valeurs listées préétablies, ou par interpolation à l'aide de telles valeurs.

**5.** Procédé selon les revendications 3 et 4,
**caractérisé par le fait que** la réduction précitée de la consigne d'accélération est traitée uniquement en tant que valeur indicative,
ladite consigne d'accélération pouvant être modifiée en fonction de l'état de mobilité de la totalité ou d'une partie des axes partiels prenant part au mouvement intégral, depuis ladite valeur indicative jusqu'à une suppression complète de ladite réduction de la consigne d'accélération,
et ledit état de mobilité est déterminé par un ou plusieurs des paramètres respectivement mesurables ou opérants en temps réel.

**6.** Procédé selon la revendication 5,
**caractérisé par le fait que** l'état de mobilité susmentionné prend en compte l'un ou plusieurs des paramètres énoncés ci-après, pouvant impliquer un accroissement de la consigne d'accélération en exerçant une influence de manière d'autant plus intense qu'ils présentent des petites valeurs :

    a. excursion instantanée des axes additionnels considérés, à partir de leur position centrale
    b. vitesse de mouvement instantanée de tous les axes partiels pris en considération
    c. mouvements devant être exécutés dans l'enchaînement direct.

**7.** Procédé selon les revendications 5 et 6,
**caractérisé par le fait qu'**une partie respective de la latitude de mouvement d'axes additionnels demeure utilisable sous la forme d'une étroite zone à réduction atténuée, ou sans réduction quelconque de la consigne d'accélération précitée.

**8.** Procédé selon la revendication 7,
**caractérisé par le fait que** l'étendue de l'étroite zone précitée, à réduction atténuée ou sans aucune réduction de la consigne d'accélération, est tributaire de l'état de mobilité susmentionné.

**9.** Procédé selon les revendications 7 et 8,
**caractérisé par** la présence d'une seconde zone étroite qui est assignée à des axes additionnels, offre une étendue respectivement supérieure vis-à-vis de la zone étroite précitée, et dans laquelle s'opère une transition progressive de l'efficacité de la réduction de l'accélération, depuis la valeur de la zone étroite intérieure jusqu'à la consigne d'accélération réduite susmentionnée, en se fondant sur les étapes opératoires énoncées ci-avant.

**10.** Procédé selon la revendication 9,
**caractérisé par le fait que** l'étendue de la seconde zone étroite précitée est tributaire de l'état de mobilité susmentionné.

**11.** Procédé selon les revendications 5 à 10,
**caractérisé par le fait qu'**il s'opère un traitement informatique préalable du tracé de trajectoire intégral, ou d'un tracé de trajectoire suffisamment long respectivement imminent pour un processus de mesurage ou d'usinage considéré,
et des segments, respectivement imminents sur ledit tracé de trajectoire, sont inclus dans le calcul de la consigne d'accélération susmentionnée.

**12.** Procédé selon les revendications 3 à 11,
**caractérisé par le fait que** la réduction précitée de la consigne d'accélération est traitée uniquement en tant que valeur indicative,
et il s'opère un traitement informatique préalable du tracé de trajectoire d'un processus de mesurage ou d'usinage considéré, sachant

    a. que l'allure de mouvement escomptée de tous les axes partiels est déterminée sur la base des valeurs indicatives ou maximales préétablies,
    b. que ladite allure de mouvement escomptée de tous les axes partiels est déterminée sur la base de l'hypothèse admise selon laquelle les conditions susmentionnées, ayant impliqué la réduction précitée de l'accélération, ne se présenteraient pas,

c. qu'il est fermement établi, par comparaison des positions parallèles des allures de mouvements découlant de a) et b), si tous les axes se trouvent pour l'essentiel, dans les limites de l'allure de mouvement découlant de a), en un état qui autorise l'exécution d'allures de mouvements par le biais de fortes accélérations, en concordance avec l'allure de mouvement découlant de b),

et les données émanant des allures de mouvements de a) et b) sont combinées en une allure de mouvement résultante, de façon correspondante, sachant que les données découlant de b) sont utilisées en présence de la condition précitée, et que des zones de transition sont prévues entre les allures de mouvements précitées, en vue de l'adaptation à la consigne d'accélération respectivement opérante.

**13.** Procédé selon l'une des revendications précédentes,
**caractérisé par le fait que** des mouvements avec l'accélération maximale de l'axe additionnel demeurent exécutables, pour des signaux correcteurs d'une compensation préalable ou d'un contre-couplage, indépendamment de la réduction précitée de l'accélération.

**14.** Procédé selon la revendication 13,
**caractérisé par le fait que** la nécessaire latitude de mouvement se rapportant aux mouvements précités, relativement modestes, avec l'accélération maximale de l'axe additionnel, est retranchée de la latitude de mouvement totale dudit axe additionnel, et cela est pris en compte lors d'autres étapes opératoires.

**15.** Procédé selon l'une des revendications précédentes,
**caractérisé par le fait qu'**une simulation comparative est effectuée automatiquement pour le tracé de trajectoire devant être traité, en vue de la comparaison entre une réduction de la consigne d'accélération d'axes additionnels, conforme à l'invention, et une réduction de la vitesse constante recherchée, susmentionnée, jusqu'à une valeur qui serait utilisable également sans réduction de la consigne d'accélération précitée, puis le procédé respectivement le plus efficient est mis en application.

**16.** Procédé selon la revendication 15,
**caractérisé par le fait que** le tracé intégral de trajectoire, devant être traité, est scindé en des segments exécutables en mode individuel, et la comparaison précitée est effectuée pour chacun de ces segments, puis le procédé respectivement le plus efficient est mis en application.

**17.** Procédé selon les revendications 15 et 16,
**caractérisé par le fait que** l'efficience susmentionnée est mesurée au regard d'au moins l'un des critères suivants :

a. temps d'exécution
b. sûreté des processus (exemple : ruptures d'accélération - nombre, pourcentage, intensité)
c. énergie mise en oeuvre.

Fig. 1

Fig. 2

Fig. 3

**EP 2 158 526 B1**

**IN DER BESCHREIBUNG AUFGEFÜHRTE DOKUMENTE**

**In der Beschreibung aufgeführte Patentdokumente**

- EP 594699 B1, Ehlerding
- WO 200675209 A2, Gattiglio
- WO 9629634 A1, Cutler
- US 5910260 A, Gerber
- EP 1294544 B1, Sartorio
- EP 1758003 A1, Cardinale